## Europäisches Patentamt

## European Patent Office

## Office européen des brevets

(19)

(11) Veröffentlichungsnummer: **0 072 411**
**B2**

(12) **NEUE EUROPÄISCHE PATENTSCHRIFT**

(45) Veröffentlichungstag der neuen Patentschrift:
02.08.89

(51) Int. Cl.⁴: **B 29 C 65/02**

(21) Anmeldenummer: **82105689.2**

(22) Anmeldetag: **26.06.82**

(54) **Tragbare Heizpresse.**

(30) Priorität: **14.08.81 DE 8123877 U**

(43) Veröffentlichungstag der Anmeldung:
**23.02.83 Patentblatt 83/8**

(45) Bekanntmachung des Hinweises auf die Patenterteilung:
**05.09.84 Patentblatt 84/36**

(45) Bekanntmachung des Hinweises auf die Entscheidung
über den Einspruch:
**02.08.89 Patentblatt 89/31**

(84) Benannte Vertragsstaaten:
**AT BE CH DE FR GB IT LI LU NL SE**

(56) Entgegenhaltungen:
**DE-A-2 356 517**
**DE-A-2 435 907**
**DE-A-2 458 796**
**DE-A-2 539 347**
**DE-U-8 011 833**
**FR-A-669 259**
**FR-A-2 503 027**
**GB-A-543 717**
**US-A-2 790 478**
**US-A-3 047 051**

(73) Patentinhaber: **Hoesch Maschinenfabrik
Deutschland Aktiengesellschaft, Borsigstrasse 22,
D-4600 Dortmund 1 (DE)**

(72) Erfinder: **Reyer, Manfred, Dipl.- Ing., Altumstrasse
3, D-4600 Dortmund 30 (DE)**
Erfinder: **Schmidts, Klaus, Ludolfweg 2, D-4600
Dortmund 70 (DE)**

EP 0 072 411 B2

LIBER, STOCKHOLM 1989

## Beschreibung

Die Erfindung bezieht sich auf eine tragbare Heizpresse zum Verschweißen von beschrifteten Folien aus thermoplastischem Kunststoff, insbesondere PVC, zu einschichtigen Ausweisen, mit einem Pressenantrieb, einer festen und einer verschiebbaren Pressentraverse sowie einem Gebläse zum Kühlen der Heizplatten und der zusammengeschweißten Folien.

Eine Heizpresse der vorgenannten Art, wie sie beispielsweise durch das DE-GM8 011 833 bekannt ist, besitzt zur Aufnahme der beiden Heizplatten ein Pressengerüst mit einer festen und einer verschiebbaren Pressentraverse, Angetrieben wird die verschiebbare Pressentraverse durch einen mittig zu vier Führungssäulen angeordneten Hydraulikzylinder,

Beim Einsatz einer solchen Heizpresse wurde festgestellt, daß die verschiebbare Pressentraverse zur Vereckung in den Führungssäulen neigt, wenn sich die Reibungsverhältnisse an den einzelnen Führungssäulen unterschiedlich ändern.

Da jedoch die Reibungsverhältnisse an den einzelnen Führungssäulen über eine längere Betriebszeit nicht konstant sind, kommt es immer wieder zur Vereckung der verschiebbaren Pressentraverse in den Führungssäulen und damit zum Ausfall der Heizpresse.

Der Erfindung liegt die Aufgabe zugrunde, eine Heizpresse der eingangs genannten Art so auszubilden, daß Vereckungen der verschiebbaren Pressentraverse in ihren Führungen ausgeschlossen sind.

Erfindungsgemäß wird diese Aufgabe dadurch gelöst, daß zur Führung und zum Antrieb der verschiebbaren Pressentraverse zwei von einem Getriebemotor angetriebene Spindelhubgetriebe vorgesehen sind und daß im Kraftfluß zwischen den Spindelhubgetrieben und der verschiebbaren Pressentraverse zwei Tellerfedern eingesetzt sind.

An der verschiebbaren Pressentraverse ist ein Endschalter befestigt, der im zusammengedrückten Zustand der Tellerfedern den Getriebemotor abschaltet.

Eine Heizpresse nach der Erfindung erlaubt eine geneigte Anordung der Heizplatten, womit eine besonders einfache Beschickung der Heizpresse verbunden ist.

Im folgenden wird die Erfindung anhand einer Zeichnung, in der ein Ausführungsbeispiel schematisch dargestellt ist, beschrieben.

Es zeigt

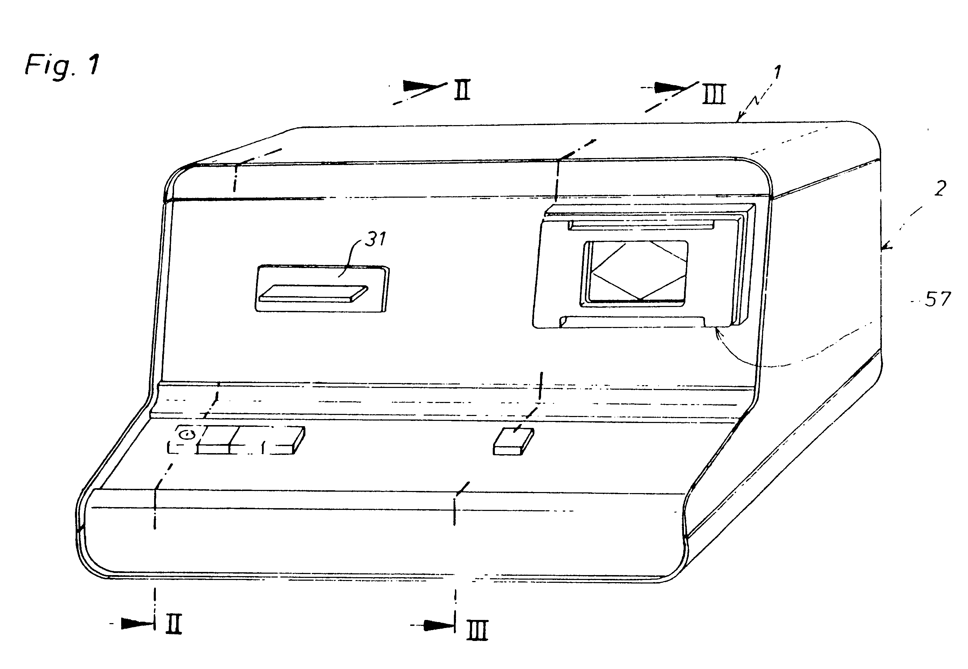

Figur 1 eine Heizpresse mit einer Ausweisstanze in perspektivischer Darstellung,

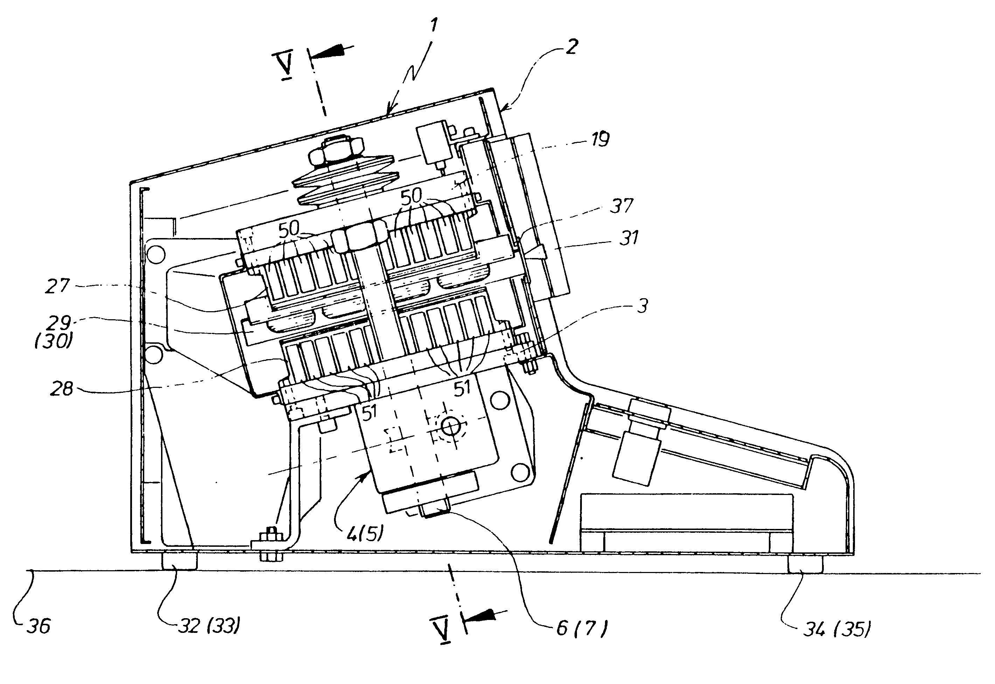

Figur 2 einen Schnitt entsprechend der Linie II - II in Fig, 1,

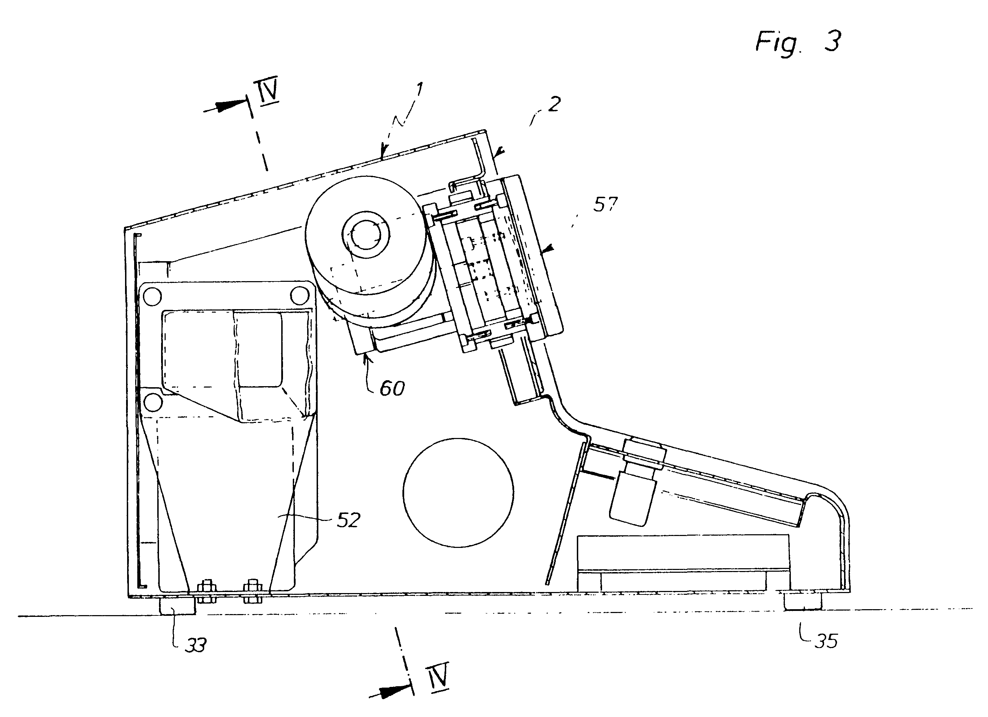

Figur 3 einen Schnitt entsprechend der Linie III - III in Fig. 1,

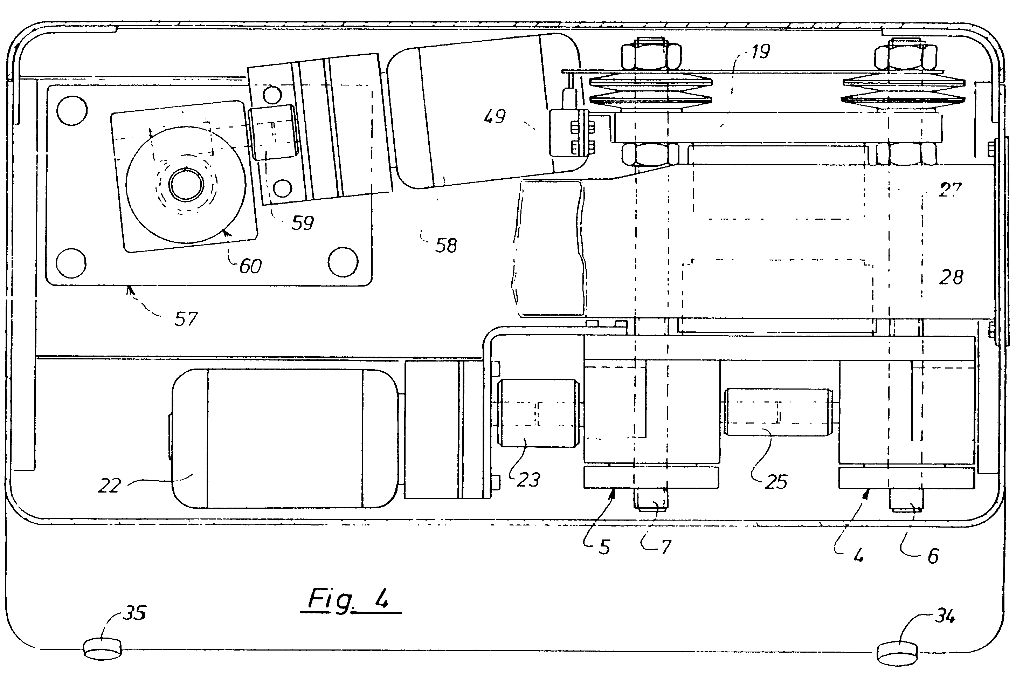

Figur 4 einen Schnitt entsprechend der Linie IV - IV in Fig. 3,

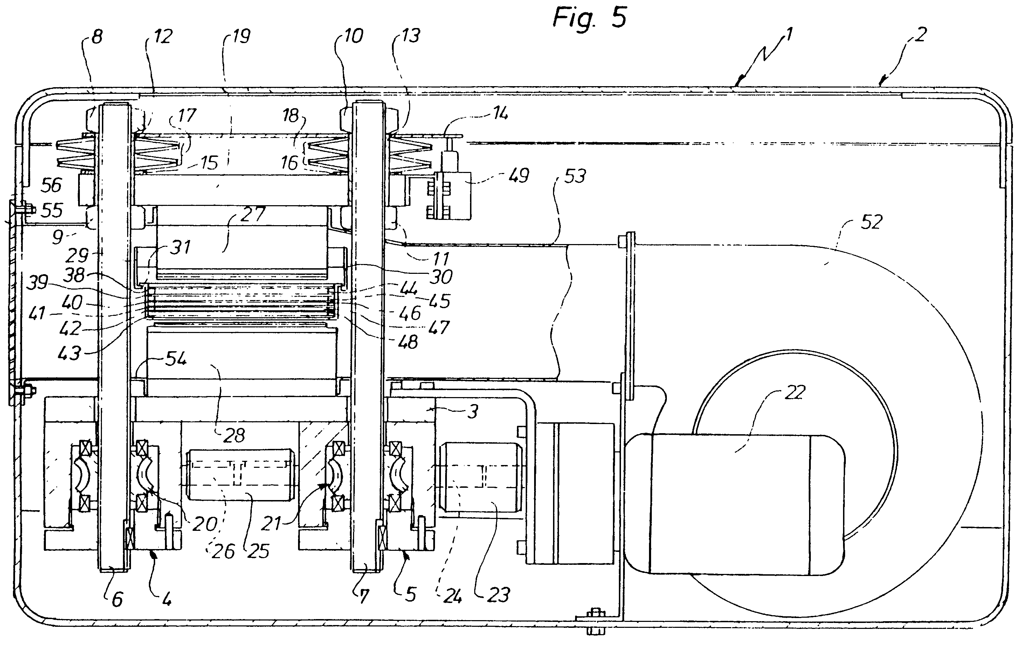

Figur 5 einen Schnitt entsprechend der Linie V - V in Fig. 2.

Eine Heizpresse 1 weist ein für den Handtransport geeignetes Gehäuse 2 auf, wie es bei Büromaschinen verwendet wird, Sie enthält zwei an einer festen Pressentraverse 3 angeschraubte Spindelhubgetriebe 4, 5, deren Hubspindeln 6, 7 über vier Gewindemuttern 8, 9, 10, 11, zwei Führungs- und Distanzbuchsen 12, 13, eine Lasche 14, zwei Unterlegscheiben 15, 16 und zwei Satz Tellerfedern 17, 18 mit einer verschiebbaren Pressentraverse 19 in Wirkverbindung stehen,

Die Hubspindeln 6, 7 sind Kugelrollspindeln.

Beide Spindelhubgetriebe 4, 5 enthalten je ein Schneckengetriebe 20, 21. Ein Getriebemotor 22 treibt über eine Kupplung 23 die Schneckenwelle 24 des Schneckengetriebes 21 an. Die Drehbewegung der Schneckenwelle 24 überträgt eine Kupplung 25 auf die Schneckenwelle 26 des Schneckengetriebes 20.

Der Getriebemotor 22 ist im Innern mit einer Haltebremse (nicht dargestellt) ausgestattet.

Jeder Pressentraverse 3, 19 ist je eine elektrisch beheizbare Heizplatte 27, 28 zugeordnet.

An der Heizplatte 27 befinden sich zwei Führungsleisten 29, 30 zur Führung eines Beschickungstabletts 31,

Die Spindelhubgtreibe 4, 5, die Pressentraversen 3, 19, die Heizplatten 27, 28 und die Führungsleisten 29, 30 sind geneigt unter einem Winkel von 15° zu der von den Gehäusefüßen 32, 33, 34, 35 gebildeten Stützebene 36 angeordnet.

Durch die schräge Stellung der Heizplatten 27, ·28 und der Führungsleisten 29, 30 wird erreicht. daß das Beschickungstablett 31 infolge seiner Schwerkraft auf den Führungsleisten 29, 30 bis zu einem Anschlag 37 rutschen kann.

Das Beschickungstablett 31 ist ausgelegt zur Aufnahme von sechs Zwischenplatten 38, 39, 40, 41, 42, 43 aus Metall und von fünf Lagen 44, 45, 46, 47, 48 aus je vier Kunststoffolien des Flächenformats 115 mm x 80 mm. Von den vier Kunststoffolien einer Lage 44, 45, 46, 47, 48 sind jeweils zwei beschriftet.

Ein an der verschiebbaren Pressentraverse 19 befestigter Endschalter 49 bewirkt ein Abschalten des Getriebemotors 22, sobald die Tellerfedern 17, 18 entsprechend der vorgegebenen Preßkraft zusammengedrückt sind.

Das Verschweißen der einzelnen Lagen 44, 45, 46, 47, 48 aus je vier Kunststoffolien zu fünf einschichtigen Ausweisen erfolgt gleichzeitig zwischen den Heizplatten 27, 28 durch Zuführen von Wärme bei nahezu konstanter Preßkraft.

Um eine möglichst schnelle Abkühlung der fünf einschichtigen Ausweise zu erreichen, werden die mit Kühlkanälen 50, 51 versehenen Heizplatten 27, 28 gekühlt.

Als Kühlmedium wird Luft benutzt, die ein Gebläse 52 durch einen Leitungsstutzen 53 zu den Heizplatten 27, 28 fördert. Die erwärmte Kühlluft wird nach außen geleitet durch einen Leitungsstutzen 54, eine Gehäuseöffnung 55 und ein an das Gehäuse 2 angeschraubtes Gitter 56.

Nach dem Kühlvorgang werden die fünf einschichtigen Ausweise einzeln in einer Ausweisstanze 57 auf das Flächenformat 85 mm x 53 mm beschnitten.

Die Hubbewegung der Ausweisstanze 57 erzeugt ein Getriebemotor 58, der über eine Kupplung 59 ein Spindelhubgetriebe 60 antreibt.

**Patentansprüche**

1. Tragbare Heizpresse zum Verschweißen von beschrifteten Folien aus thermoplastischem Kunststoff, insbesondere PVC, zu einschichtigen Ausweisen, mit einem Pressenantrieb, zwei Heizplatten, einer festen und einer verschiebbaren Pressentraverse sowie einem Gebläse zum Kühlen der Heizplatten und der zusammengeschweißten Folien, dadurch gekennzeichnet, daß zur Führung und zum Antrieb der verschiebbaren Pressentraverse (19) zwei von einem Getriebemotor (22) angetriebene Spindelhubgetriebe (4, 5) vorgesehen sind und daß im Kraftfluß zwischen den Spindelhubgetrieben (4, 5) und der verschiebbaren Pressentraverse (19) zwei Satz Tellerfedern (17, 18) eingesetzt sind.

2. Heizpresse nach Anspruch 1 dadurch gekennzeichnet. daß an der verschiebbaren Pressentraverse (19) ein Endschalter (49) für den Getriebemotor (22) befestigt ist.

**Claims**

1. Portable heating press for welding together sheets carrying written matter to form single-layer cards, the sheets being of thermoplastic synthetic material, particularly PVC, and the press having a press drive, two heating plates, a fixed and a movable cross member, as well as a blower for cooling the heating plates and the welded sheets, characterised in that two geared spindle lifting drive units (4, 5) driven by a geared motor (22) are provided for guiding and driving the movable cross-member (19) and that two sets of cup springs (17, 18) are inserted in flux of force between the lifting units (4, 5) and the movable cross-member (19).

2. Heating press according to claim 1, characterised in that a limit switch (49) for the geared motor (22) is secured to the movable cross-member (19).

**Revendications**

1. Presse à chaud portative en vue de souder des feuilles portant des inscriptions et constituées d'une matière synthétique thermoplastique, en particulier, de chlorure de polyvinyle, pour documents à une seule couche, cette presse comportant une commande, deux plaques chauffantes, un plateau fixe et un plateau mobile, ainsi qu'une soufflerie en vue de refroidir les plaques chauffantes et les feuilles soudées l'une à l'autre, caractérisée en ce que, pour guider et actionner le plateau mobile (19), on prévoit deux mécanismes de levage à broche (4, 5) actionnés par un moto-réducteur (22) et ce que dans le flux de force entre les mécanismes de levage à broche (4, 5) et le plateau mobile (19), on prévoit deux jeux de ressorts à disques (17, 18).

2. Presse à chaud suivant la revendication 1, caractérisée en ce que, sur le plateau mobile (19), est fixé un interrupteur de fin de course (49) pour le moto-réducteur (22).

Fig. 1

Fig. 3

EP 0 072 411 B2

Fig. 4

*Fig. 5*

EP 0 072 411 B2